# EUROPÄISCHE PATENTSCHRIFT

(11) **EP 0 909 903 B1**
(45) Veröffentlichungstag und Bekanntmachung des Hinweises auf die Patenterteilung: **27.11.2002**
(21) Anmeldenummer: 98115968.4
(22) Anmeldetag: 25.08.1998
(51) Int. Cl.: F16D 48/08, B60K 41/02, F16D 48/06

(54) **Sicherheitsvorrichtung für Fahrzeug mit automatisch betätigter Kupplung**
Safety device for a vehicle with an automatic clutch
Appareil de sécurité pour véhicules avec un embrayage automatisée

(30) Priorität: 17.10.1997 DE 19745675
(43) Veröffentlichungstag der Anmeldung: 21.04.1999
(73) Patentinhaber: DaimlerChrysler AG, 70567 Stuttgart (DE)
(72) Erfinder: Grass, Thomas, 73660 Urbach (DE); Koch, Bernd, 71522 Backnang (DE); Kosik, Franz, 73760 Ostfildern (DE)

(56) Entgegenhaltungen:
- DE-A- 19 632 807
- US-A- 5 632 706

## Beschreibung

Die Erfindung betrifft ein Fahrzeug mit im Triebstrang zwischen Motor und Getriebe angeordneter, automatisch betätigter Kupplung gemäß dem Oberbegriff des Anspruches 1.

Bei Fahrzeugen der vorgenannten Art mit automatisch betätigter Kupplung - beispielsweise gemäß der DE-Zeitschrift: Krafthand, Heft 9, 11. Mai 1991, Seiten 612 bis 613 - erfolgt die Betätigung der Kupplungsausrückvorrichtung zum Wechseln der Gangstufen im Getriebe unter Vermittlung einer Leistungselektronik in der Regel über einen Stellmotor, wobei der Leistungsteil direkt über Dauerplus von der Batterie versorgt wird. Auch die Spannungsversorgung des Kupplungssteuergerätes kann auf diesem Wege erfolgen. Aktiviert wird das Kupplungssteuergerät in der Regel beim Einschalten der Zündung, gegebenenfalls auch durch Betätigung des Bremspedales, wobei das Zündschloß direkt mit der Spannungsversorgung verbunden ist, und üblicherweise auch gesondert abgesichert ist.

Für Fahrzeuge mit automatisch betätigter Kupplung (DE 44 26 260 A1) ist es ferner bekannt. diese im Hinblick auf Systemfehler zu überwachen und für den Fall des Erkennens schwerwiegender Systemfehler im Rahmen einer Sicherheitsphilosophie geeignete Abhilfen oder Notmaßnahmen vorzusehen. So wird beispielsweise bei Ausfall der Spannungsversorgung das System abgeschaltet, mit der Folge, daß die Kupplung geschlossen wird.

Fällt die Spannungsversorgung nicht völlig aus, sondern wird sie für das Kupplungssteuergerät nur kurzzeitig unterbrochen, z.B. durch einen Wackelkontakt, so können sich beim Wiederzuschalten der Spannungsversorgung kritische Situationen ergeben.

Würde beispielsweise bei Wiederaufnahme der Spannungsversorgung des Steuergerätes die Kupplung einrücken, also in eine voll eingerückte Position fahren, so könnte dies bei eingelegtem Gang und laufendem Motor dazu führen, daß das Fahrzeug ungewollt anfährt.

Um Fehlfunktionen dieser oder ähnlicher Art vorzubeugen ist erfindungsgemäß vorgesehen, daß beim Wiederzuschalten der Spannungsversorgung für das Steuergerät nach kurzzeitiger Unterbrechung und bei nach wie vor vorhandenem Aktivierungssignal ein Einrücken der Kupplung verhindert wird, die Kupplung also geöffnet oder geöffnet gehalten wird, und zwar zumindest dann, wenn ein Gang eingelegt und eine Motordrehzahl größer Null gegeben ist Ergänzend kann auch vorgesehen werden, daß die Kupplung geöffnet oder geöffnet gehalten wird, wenn Fahrzeugstillstand gegeben ist oder eine Fahrgeschwindigkeit, die unterhalb eines vorgegebenen relativ niedrigen Grenzwertes liegt

Die Erfindung wird im folgenden anhand eines Ausführungsbeispieles näher erläutert, das in stark schematisierter Darstellung ein Steuergerät für die automatische Betätigung einer Kupplung zeigt, und zwar einschließlich die Funktion des Steuergerätes beeinflussender Stellgrößen und zugehöriger Spannungsversorgung.

Im dargestellten Ausführungsbeispiel ist mit 1 das Kupplungssteuergerät für die automatisierte Betätigung einer Kupplung bezeichnet, wobei die Kupplung ebensowenig gezeigt ist wie der Triebstrang des Fahrzeuges, in dem diese zwischen Motor und Getriebe liegend angeordnet ist, wie auch das Fahrzeug selbst Am Kupplungssteuergerät 1 ist eine Anschlußbuchse 2 für die elektrischen, der Spannungsversorgung und der Übermittlung von Steuersignalen dienenden Leitungen.

Die Spannungsversorgung erfolgt dabei über Leitungen 3 und 4, von denen die Leitung 3 mit dem Pluspol 5 einer Batterie 6 verbunden ist (Klemme 30), während die Leitung 4 an den Minuspol 7 der Batterie 6 angeschlossen ist (Klemme 31). An den Pluspol 5 ist weiter über eine Leitung 8 das Zündschloß 9 angeschlossen, dessen Zündschalter 10 beim Einschalten der Zündung das Steuergerät 1 aktiviert, wobei die entsprechende Leitungsverbindung mit 11 bezeichnet ist und die Leitung 11 am Zündschloß 9 in nicht näher gezeigter Weise angeschlossen ist (Klemme 15).

Symbolisch sind auch weitere Steuergeräte dargestellt, die dem gleichen Fahrzeug zugeordnet sind, und es sind dies beispielsweise ein Motorsteuergerät 12, ein Bremssteuergerät 13, ein Klimasteuergerät 14 und ein Kombiinstrument 15. Deren Signale werden unter Vermittlung eines Can-Buses 16 über die Leitung 17 dem Steuergerät 1 zugeführt.

Ergibt sich für das Steuergerät 1 eine kurzzeitige Unterbrechung der Spannungsversorgung, wie sie generell durch einen Wackelkontakt oder dergleichen auftreten kann, so bleibt das Steuergerät 1, da nach wie vor das Aktivierungssignal anliegt, zwar "zugeschaltet", ist mangels Spannungsversorgung aber kurzzeitig zur Ausübung seiner Funktionen nicht im Stande. Hierdurch können sich kritische Situationen ergeben, sei es dadurch, daß während der kurzen Phase mangelnder Spannungsversorgung anstehende Signale nicht verarbeitet werden konnten, sei es dadurch, daß durch den momentanen Zustand der Unterbrechung der Spannungsversorgung unerwünschte Funktionen angestoßen werden. Eine mögliche kritische Situation ergibt sich beispielsweise dann, wenn während oder kurz nach der erneuten Spannungsversorgung des Steuergerätes 1 die Kupplung in eine voll eingerückte Position gefahren wird, mit entsprechender Momentenübertragung im Triebstrang. Ist dies beispielsweise bei eingelegtem Gang und laufendem Motor der Fall, so kann sich auch eine Beschleunigung des Fahrzenges aus dem Stillstand ergeben.

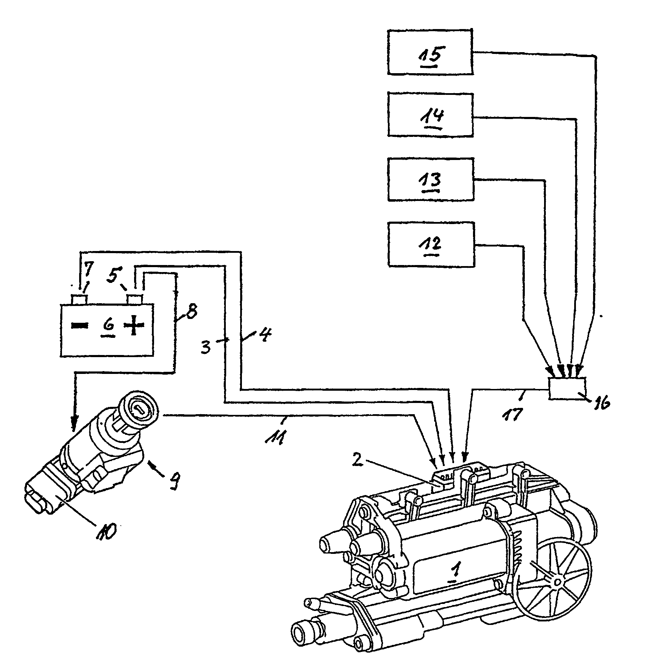

Um dem vorzubeugen wird, was aus der Zeichnung nicht ersichtlich ist, bei Wiederaufnahme der Spannungsversorgung ein Einrücken der Kupplung dann verhindert, wenn ein Gang eingelegt ist und eine Motordrehzahl größer Null gegeben ist, und dies insbesondere bei Fahrzeugstillstand oder bei unterhalb eines vorgegebenen, relativ niedrigen Grenzwertes liegender Fahrgeschwindigkeit.

Die erfindungsgemäße Maßnahme, ein Einrücken der Kupplung unmittelbar nach Wiederaufnahme der Spannungsversorgung zu verhindern, also in dieser Phase die Kupplung geöffnet zu halten, bietet die Möglichkeit, daß sich das Steuergerät neu orientiert und in Kenntnis der aktuellen Simation ausgehend vom geöffneten Kupplungszustand die der Situation angepaßten Steuerbefehle gibt.

## Patentansprüche

1. Fahrzeug mit im Triebstrang zwischen Motor und Getriebe angeordneter, automatisch betätigbarer Kupplung, der Kupplung zugeordneter Stelleinrichtung, einer Spannungsquelle (6) und einem Kupplungssteuergerät (1), das mit der Spannungsquelle verbunden ist und das durch Zu- bzw. Abschaltsignale aktivierbar bzw. deaktivierbar ist, **dadurch gekennzeichnet,**
**daß** bei zugeschaltetem Kupplungssteuergerät (1), kurzzeitiger Unterbrechung von dessen Spannungsversorgung und Wiederaufnahme der Spannungsversorgung die Kupplung geöffnet bzw. geöffnet gehalten wird, zumindest dann, wenn ein Gang eingelegt und eine Motordrehzahl größer Null gegeben ist.

2. Fahrzeug nach Anspruch 1,
**dadurch gekennzeichnet,**
**daß** die Kupplung geöffnet bzw. geöffnet gehalten wird, wenn Fahrzeugstillstand oder eine unter einem Grenzwert, insbesondere unter einem verhältnismäßig niedrigen Grenzwert liegende Fahrzeuggeschwindigkeit gegeben ist.

## Claims

1. Vehicle with an automatically activated clutch arranged in the drive train between engine and transmission, a regulating device assigned to the clutch, a voltage source (6) and a clutch control device (1) which is connected with the voltage source and can be activated or de-activated through switch-on or switch-off signals
**characterised in that**
when the clutch control device (1) is switched on and there is short-term interruption of its voltage supply and restoration of the voltage supply the clutch is opened or kept open at least if a gear is engaged and the engine speed is greater than zero.

2. Vehicle according to claim 1
**characterised in that**
the clutch is opened or kept open if the vehicle is at a standstill or the vehicle speed lies below a threshold value, in particular below a relatively low threshold value.

## Revendications

1. Véhicule comportant un embrayage à actionnement automatique agencé dans la ligne d'entraînement entre le moteur et la boîte de vitesses, comportant un dispositif de positionnement associé à l'embrayage, une source de tension (6) et un appareil de commande d'embrayage (1) qui est connecté à la source de tension et qui peut être activé ou désactivé par des signaux de mise en marche et d'arrêt, **caractérisé en ce que**, l'appareil de commande d'embrayage (1) étant mis en circuit, lors d'une brève interruption de son alimentation en tension et lors d'une remise de l'alimentation en tension, l'embrayage peut être ouvert ou maintenu ouvert au moins lorsqu'un rapport de vitesses est engagé et que la vitesse de rotation du moteur est supérieure à zéro.

2. Véhicule selon la revendication 1, **caractérisé en ce que** l'embrayage est ouvert ou maintenu ouvert en cas d'arrêt du véhicule ou lorsque la vitesse du véhicule est inférieure à une valeur limite, en particulier à une valeur limite relativement faible.
